# EUROPEAN PATENT APPLICATION

(11) **EP 0 629 517 A1**
(43) Date of publication of application: **21.12.1994**
(21) Application number: 94850090.5
(22) Date of filing: 19.05.1994
(51) Int. Cl.: B60B 7/12

(54) **Device for mounting a wheel disc on a rim for a vehicle wheel**

(30) Priority: 18.06.1993 SE 9302130
(71) Applicant: UNITED WHEELCOVERS AKTIEBOLAG, S-272 24 Simrishamn (SE)
(72) Inventor: Arvidsson, Krister Erik Gustav, S-270 11 Abbekas (SE)
(74) Representative: Erixon, Bo

(57) **Abstract**

This invention relates to a device for mounting a wheel disc on a rim for a vehicle wheel. The fastening system for the wheel disc is made out of plastic and comprises peripheral beads (16) facing the rim and engaging one or several recesses or the like on the rim. The beads are supported by resilient tongues (13a, 13b) which are a flexible part of the fastening system and the beads cooperate with a resilient ring (19) pressing the beads against the recess. The tongues (13a,13b) are parts of a peripherally arranged cylinder shaped flange (13).

## Description

This invention relates to a device for mounting a wheel disc on a rim for a vehicle wheel, the fastening system of the wheel disc being made out of plastic and comprising peripheral beads facing the rim and engaging one or several recesses or the like on the rim the beads being supported by resilient tongues which are a flexible part of the fastening system in which the beads cooperate with a resilient ring pressing the beads against the recess.

Devices of the type described above are previously known. These devices usually comprise spring elements in the form of tongues extending perpendicular to the plane of the wheel disc the outer ends of the tongues supporting the resilient ring. In order to achieve sufficient flexibility of the tongues and to prevent them from braking off during mounting they have to have a rather great length which means that the wheel disc demands for a certain axial extension of the rim resulting in difficulties to store and to transport the wheel discs. It also happens that the tongues are so much bent outwardly that the ring comes loose. Another drawback which the previously known devices have is that they presuppose the use of a closed resilient ring. Manufacturing such rings is complicated since it comprises a welding operation which, with respect to the material content of the ring can only be made by few producers.

The purpose of this invention is to achieve a compact fasening system for a wheel disc that is a system having a small extension in the axial direction and which is easy to manufacture. Another purpose of the invention is to avoid the use of a closed ring and instead to use a ring which is open, the resilient elements holding the ring only having the possibility to yield a certain distance radially outwards.

This is achieved by means of a device which has the caracteristics mentioned in the claims.

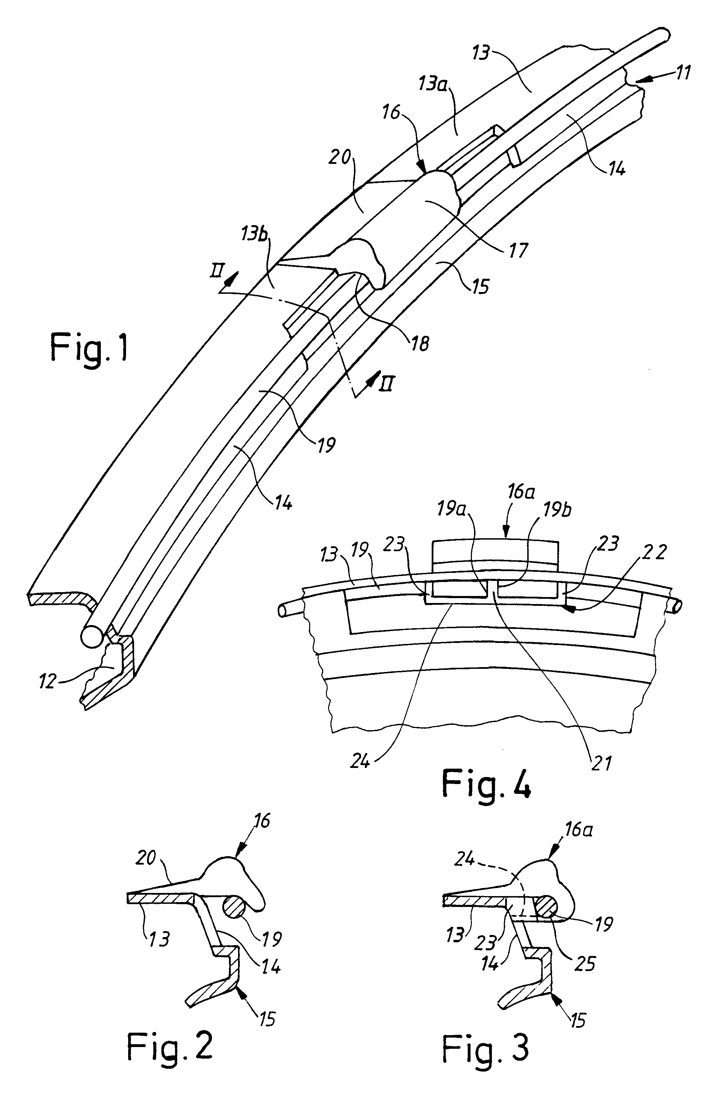

An embodiment will now be described with reference to the accompanying drawing in which Fig. 1 in a perspective view shows a fastening system according to the invention, Fig. 2 is a section on the line II-II in Fig. 1, Fig. 3 shows one of the resilient elements in the construction in the same view as the element shown in Fig. 3 whereas Fig. 4 is a side view of the element shown in Fig. 3.

As appears from Fig. 1 said fastening system comprises a plastic detail 11 which is shaped in one single piece with the wheel disc 12 or which in a suitable way is mounted on a wheel disc of any material. The detail comprises a peripheral rather thin flange 13 which is shaped as a short cylinder. The flange continues via several mainly radially directed parts 14 into an inner fastening means 15 or the like on which the wheel disc is arranged. Between the radially directed parts 14 there is a bead 16 which is fastened in the cylinder shaped flange 13 and directed mainly in the axial direction. The bead 16 has an outer surface 17 whose shape corresponds to the shape of a recess on the rim so that the wheel disc is retained on the rim when said surface engages the recess. The bead 16 also has a peripherally directed recess 18 which is open towards the radially inner part of the bead and against which a resilient ring 19 rests. The ring 19 extends around the complete periphery of the wheel disc and is preferably an open ring whose function will appear from the following.

The fastening means of the bead into the cylinder shaped flange 13 comprises a reinforcement 20 which at each side is connected to the parts 13a, 13b, shaped as tongues, on the flange 13 and which serve as resilient elements. Because of the short distance between the fastening point of the bead and the point of action of the forces which the bead is subject to at the recess 18 and the surface 17, the bead will be so stiff that the resilient ring is firmly retained at the rim at the same time as the flexibility which is nesseccary is mainly achieved by means of deformation of the fastening points i.e. the resilient elements.

One of the beads 16a of the fastening system which is shown in Fig. 3 and 4 has a different shape with regard to the other beads. This bead is a fastening means for the resilient open ring 19 which has two end parts 19a, 19b which rest against each side of a partition wall 21 which is shaped in a pocket 22 immediately below the bead 19. The pocket 22 is limited by two outer walls 23, a bottom part 24, the cylindershaped flange 13 and the bead 16a each outer wall having an opening 25 through which the ends of the ring is inserted into the pocket until they abut the partition wall 21.

## Claims

1. Device for mounting a wheel disc on a rim for a vehicle wheel, the fastening system for the wheel disc being made out of plastic and comprising peripheral beads (16) facing the rim and engaging one or several recesses or the like on the rim, the beads being supported by resilient tongues (13a, 13b) which are a flexible part of the fastening system in which the beads cooperate with a resilient ring (19) pressing the beads against the recess, **caracterised in** that the tongues are parts of a peripherally arranged cylinder shaped flange (13).

2. Device according to claim 1, **caracterised in** that the flange (13) via several mainly radially inwardly directed and at a distance from each other arranged parts (14) are connected to a fastening means (15)

3. Device according to claim 2, **caracterized in** that the bead (16) is placed centrally between said parts (14).

4. Device according to claim 2 or 3, **caracterized in** that the resilient ring (19) and the flange (13) are placed at each side of a plane which extends through said parts (14).

5. Device according to any of the preceding claims, **caracterized in** that the bead (16) comprises a recess (18) or the like directed radially inwards the resilient ring (19) abutting said recess.

6. Device according to any of the preceeding claims, **caracterized in** that the resilient ring (19) is an open ring.

7. Device according to claim 6, **caracterized in** that one of the beads (16) is provided with a fastening means (22) for the open ring.

8. Device according to claim 7, **caracterized in** that the fastening means (22) comprises a pocket or the like with a partition wall (21) which sides the ends of the open ring (19a,19b) abut.

9. Device according to claim 8, **caracterized in** that the pocket also comprises outer walls (23) through which the open ends (19a,19b) are inserted into the pocket.
